(19) Europäisches Patentamt
European Patent Office
Office européen des brevets

(11) EP 2 780 378 B1

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **12769401.6**

(22) Anmeldetag: **28.09.2012**

(51) Int Cl.:
***C08F 2/38*** $^{(2006.01)}$ ***C09J 153/00*** $^{(2006.01)}$
***C08F 8/42*** $^{(2006.01)}$ ***C08F 8/48*** $^{(2006.01)}$
***C08F 220/18*** $^{(2006.01)}$ ***C08F 293/00*** $^{(2006.01)}$

(86) Internationale Anmeldenummer:
**PCT/EP2012/069288**

(87) Internationale Veröffentlichungsnummer:
**WO 2013/072120 (23.05.2013 Gazette 2013/21)**

(54) **VERFAHREN ZUR HERSTELLUNG UNGEFÄRBTER POLYACRYLATKLEBEMASSEN MIT ENGER MOLMASSENVERTEILUNG**

METHOD FOR PRODUCING NON-COLORED POLYACRYLATE ADHESIVE COMPOUNDS WITH A NARROW MOLAR MASS DISTRIBUTION

PROCÉDÉ DE PRODUCTION DE SUBSTANCES ADHÉSIVES INCOLORES, À BASE DE POLYACRYLATE, AYANT UNE DISTRIBUTION ÉTROITE DES MASSES MOLAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2011 DE 102011086502**

(43) Veröffentlichungstag der Anmeldung:
**24.09.2014 Patentblatt 2014/39**

(73) Patentinhaber: **tesa SE**
**22848 Norderstedt (DE)**

(72) Erfinder: **PRENZEL, Alexander**
**20259 Hamburg (DE)**

(56) Entgegenhaltungen:
**WO-A1-2011/101175**

- **ANTOINE BOUSQUET ET AL: "Synthesis of comb polymers via grafting-onto macromolecules bearing pendant diene groups via the hetero-Diels-Alder-RAFT click concept", JOURNAL OF POLYMER SCIENCE PART A: POLYMER CHEMISTRY, Bd. 48, Nr. 8, 15. April 2010 (2010-04-15) , Seiten 1773-1781, XP055048351, ISSN: 0887-624X, DOI: 10.1002/pola.23943**
- **LEENA NEBHANI ET AL: "Quantification of Grafting Densities Achieved via Modular "Grafting-to" Approaches onto Divinylbenzene Microspheres", ADVANCED FUNCTIONAL MATERIALS, Bd. 20, Nr. 12, 23. Juni 2010 (2010-06-23) , Seiten 2010-2020, XP055048353, ISSN: 1616-301X, DOI: 10.1002/adfm.200902330**
- **ANDREW J. INGLIS ET AL: "Ultrafast Click Conjugation of Macromolecular Building Blocks at Ambient Temperature", ANGEWANDTE CHEMIE INTERNATIONAL EDITION, 17. Februar 2009 (2009-02-17), Seiten NA-NA, XP055018786, ISSN: 1433-7851, DOI: 10.1002/anie.200805993**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 780 378 B1

## Beschreibung

Die vorliegende Erfindung betrifft ein Verfahren zur Herstellung von ungefärbten Polyacrylathaftklebemassen mit enger Molmassenverteilung mittels radikalischer Polymerisation sowie Produkte, die mit diesen Klebemassen hergestellt werden.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer in der Regel vernetzt. Die Härtung verläuft thermisch, durch UV-Vernetzung (ultraviolette Strahlung) oder durch ES-Härtung (ES: Elektronenstrahlung). Der beschriebene Prozess ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Zudem ist es sehr schwierig, Haftklebebänder mit hohem Masseauftrag blasenfrei herzustellen.

Eine Verbesserung dieser Nachteile bedeutet der Heißschmelz-Prozess (Hotmelt-Prozess). Hier wird der Haftkleber in der Schmelze auf das Trägermaterial aufgetragen.

Mit dieser neuen Technik sind aber auch Einschränkungen verbunden. Vor der Beschichtung wird der Haftklebemasse das Lösemittel in einem Trocknungsextruder entzogen. Der Trocknungsprozess ist mit einer relativ hohen Temperatur und Schereinwirkung verbunden, so dass besonders hochmolekulare Polyacrylathaftklebemassen stark geschädigt werden. Die Acrylathaftklebemasse vergelt oder der niedermolekulare Anteil wird durch Molekulargewichtsabbau stark angereichert wird. Beide Effekte sind unerwünscht, da sie für die Anwendung nachteilig sind. Die Klebemasse lässt sich entweder nicht mehr beschichten oder die klebtechnischen Eigenschaften der Haftklebemasse verändern sich, da z.B. bei Einwirken einer Scherkraft auf die Klebmasse die niedermolekularen Anteile als Gleitmittel wirken und so zu einem vorzeitigen Versagen der Klebemasse führen.

Eine Lösung zur Verminderung dieser Nachteile bieten Polyacrylatklebemassen mit mittlerem niedrigen Molekulargewicht und enger Molekulargewichtsverteilung. Hier wird der Anteil an niedermolekularen und hochmolekularen Molekülen in dem Polymer durch den Polymerisationsprozess stark vermindert. Durch den Wegfall der hochmolekularen Anteile verringert sich die Fließviskosität, und die Masse zeigt eine geringere Tendenz zur Vergelung. Durch die Absenkung des niedermolekularen Anteils wird die Anzahl der Oligomere verringert, die die Scherfestigkeit der Haftklebemasse verringern.

Zur Herstellung von niedermolekularen Haftklebemassen sind verschiedene Polymerisationsmethoden geeignet. Stand der Technik ist der Einsatz von Reglern, wie z.B. von Alkoholen oder Thiolen. Diese Regler reduzieren das Molekulargewicht, aber verbreitern die Molekulargewichtsverteilung.

Als eine weitere kontrollierte Polymerisationsmethode wird die Atom Transfer Radical Polymerization ATRP eingesetzt, wobei als Initiator bevorzugt monofunktionelle oder difunktionelle sekundäre oder tertiäre Halogenide und zur Abstraktion des(r) Halogenids(e) bestimmte Metall-Komplexe eingesetzt werden. Generell beeinflussen die eingesetzten Metallkatalysatoren als Nebenwirkung jedoch die Alterung der Haftklebemassen negativ (Vergelung, Umesterung). Zudem sind die meisten Metallkatalysatoren giftig, verfärben die Klebemasse und lassen sich nur durch aufwendige Fällungen aus dem Polymer entfernen.

Andere kontrollierte radikalische Polymerisationsverfahren nutzen als Initiator beispielweise eine Verbindung der Formel R'R"N-O-X, worin X eine freie radikalische Spezies darstellt, die ungesättigte Monomere polymerisieren kann, sehr spezielle Radikalverbindungen, wie z.B. Phosphor-enthaltende Nitroxide oder spezielle Nitroxyle, die auf Imidazolidin, Morpholinen, Piperazinonen oder Piperazindionen basieren. Die Reaktionen weisen aber im Allgemeinen geringe Umsatzraten aus, insbesondere bei der Polymerisation von Acrylaten, die nur zu sehr geringen Ausbeuten und Molekulargewichten führt, und/oder es werden höhere Temperaturen benötigt, um das Gleichgewicht zwischen der "schlafenden" und der aktiven Radikalspezies auf die Seite der aktiven zu verschieben und um somit die Nettoreaktionsgeschwindigkeit zu erhöhen. Die Wahl der Lösungsmittel ist somit eher auf hochsiedende Lösungsmittel beschränkt. Ein geeignetes Verfahren zur Herstellung engverteilter Polymere ist der so genannte RAFT-Prozess (Reversible Addition-Fragmentation Chain Transfer), beschrieben beispielsweise in den Schriften WO 98/01478 A1 und WO 99/31144 A1. Der dort beschriebene Prozess eignet sich nicht ohne Weiteres zur Herstellung von Haftklebemassen, da die erzielten Umsätze sehr gering sind und das mittlere Molekulargewicht der hergestellten Polymere zu niedrig für Haftklebemassen, insbesondere auf Acrylatbasis. Die derart erzeugten Polymere lassen sich somit nicht als Acrylathaftklebemassen einsetzen.

Weiterentwicklungen dieses Prozesses durch die Einführung von Thioestern oder Trithiocarbonaten sind Gegenstand der Forschung. So beschreibt die EP 1 626 994 A1 verbesserte RAFT-Regler, mit denen Polyacrylathaftklebemassen

für Hotmelt-Beschichtungen hergestellt werden konnten. Der RAFT-Prozess weist gegenüber der ATRP und der Nitroxyl-kontrollierten Polymerisation deutliche Vorteile auf, da keine Absenkung der Reaktionsgeschwindigkeit in Kauf genommen werden muss, keine teuren und teilweise instabilen Katalysatoren eingesetzt werden müssen und die RAFT-Regler universeller einsetzbar sind.

Dennoch weisen generell mittels derartiger schwefelhaltiger RAFT-Reagenzien erhaltene Acrylathaftklebemassen für viele Anwendungsbereiche Nachteile auf. Mit RAFT-Reglern hergestellte Polymere, insbesondere (Haft-)Klebemassen, weisen zwar sehr definierte Polymeraufbauten und Polydispersitäten auf und sind daher bezüglich ihrer klebtechnischen Eigenschaften sehr gut justierbar. Die Natur der RAFT-Regler bringt es jedoch aufgrund der chromophoren Zentren der funktionellen Gruppen (die insbesondere Schwefelatome, ggf. Sauerstoff oder Stickstoffatome enthaltene konjugierte Doppelbindungen aufweisen) mit sich, dass die erhaltenen Polymere in der Regel relativ stark gelb bis braun verfärbt sind, was für eine Vielzahl von Anwendungen im Klebebandbereich nicht tolerierbar ist. Zudem können herstellungsbedingte Schwefelfragmente in den Polymeren, Nebenprodukte und Regler-Überreste einen sehr unangenehmen Geruch aufweisen und sind üblicherweise ihrerseits farbig.

Die Abhandlung "Synthesis of Comb Polymers via Grafting-Onto Macromolecules Bearing Pendant Diene Groups via Hetero-Diels-Alder-RAFT Click Concept" (Bousquet, Barner-Kowollik, Stenzel; Journal of Polymer Science Part A: Polymer Chemistry, 48, Nr. 8 (2010), Seiten 1773 - 1781) beschreibt die Verwendung von Diels-Alder-Reaktionen zur Synthese von Kammpolymeren. Haftklebemassen werden dort nicht erwähnt, insbesondere auch keine Hinweise für die Herstellung im Wesentlichen nicht verfärbter Haftklebemassen gegeben.

Diels-Alder-Reaktionen in Verbindung mit Klebmassen beschreibt beispielweise die WO 2011/101175, nämlich eine mittel Diels-Alder- oder Hetero-Diels-Alder-Reaktion schaltbare Formulierung, die eine Komponente mit zwei dienophilen Doppelbindungen sowie eine Verbindung mit zwei Dien-Funktionalitäten enthält, wobei mindestens eine dieser Komponenten ein Polymer ist; die Formulierung kann unter anderem als Klebstoff verwendet werden.

Aufgabe der Erfindung ist es daher, ein entsprechendes Polymerisationsverfahren zur Verfügung zu stellen, wodurch sich Polyacrylatklebemassen mit einer engen Molmassenverteilung herstellen lassen, welches aber die Nachteile des genannten Standes der Technik nicht oder nur in vermindertem Umfang aufweist. Als wesentliche Nachteile seien die langsame Reaktionsgeschwindigkeit der ATRP und der Nitroxyl-kontrollierten Polymerisation als auch der Geruch und die Farbe der RAFT-Regler genannt.

Überraschenderweise wurde gefunden, das durch die Kombination eines RAFT-Prozesses mit anschließender Zugabe einer Dienverbindung nach Abschluss der Polymerisation Polyacrylathaftklebemassesysteme erhalten wurden, die nahezu farb- und geruchslos sind und bei deren Herstellung dennoch die Vorteile des RAFT-Prozesses, nämlich die hohe Reaktionsgeschwindigkeit und die enge Molmassenverteilung, genutzt werden konnten.

Die Erfindung betrifft daher ein Verfahren zur Herstellung von Haftklebemassen auf Acrylatbasis, in dem Polymeren auf Acrylatbasis hergestellt werden, wobei zunächst eine kontrollierte radikalische Polymerisationsreaktion einer Reaktionsvorlage umfassend zumindest ein Monomer auf Acrylatbasis, also eines Monomers auf Acrylatbasis oder einer Monomermischung enthaltend zumindest ein Monomer auf Acrylatbasis, jeweils üblicherweise in Anwesenheit von Lösemitteln, in Anwesenheit zumindest einer Reglersubstanz mit einer funktionellen Gruppe S-C=X, wobei X = S, O oder N, durchgeführt wird, wobei die Reglersubstanz aus der Gruppe umfassend

Dithioester, also Verbindungen der allgemeinen Struktur

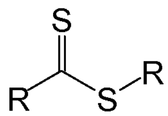

,

Dithiocarbonate, und zwar sowohl S,S'-substituierte Dithiocarbonate, also Verbindungen der allgemeinen Struktur

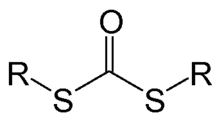

,

als auch Xanthate (O,S-substituierte Dithiocarbonate), also Verbindungen der allgemeinen Struktur

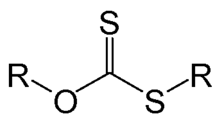

,

Dithiocarbamate, also Verbindungen der allgemeinen Struktur

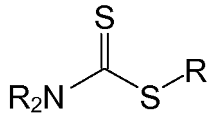 ,

Trithiocarbonate, also Verbindungen der allgemeinen Struktur

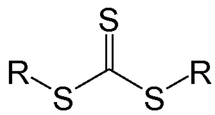

und
Imido-Dithio-Carbonate, also Verbindungen der allgemeinen Struktur

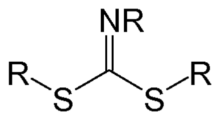

gewählt ist, wobei vorstehend R allgemein und unabhängig voneinander gewählt organische Reste oder ggf. auch anorganische Reste darstellt (die Mitglieder der genannten Gruppe an Regler-Substanzen werden im Rahmen dieser Schrift auch als "RAFT-Regler" oder als Polymerisationsregler bezeichnet).
Dabei wird die Mehrzahl der Reglersubstanz-Moleküle, insbesondere werden nahezu alle Reglersubstanz-Moleküle, derart in die entstehenden Polymerketten eingebaut, dass die jeweilige Polymerkette zumindest eine funktionelle Gruppe eines in ihr eingebauten Reglers aufweist. Erfindungsgemäß wird - bevorzugt nach Abschluss der Polymerisationsreaktion - zumindest eine chemische Verbindung, die zumindest zwei konjugierte Doppelbindungen aufweist (im Folgenden wird diese chemische Verbindung als "konjugiertes Dien" bezeichnet), in Kontakt mit den derart erhaltenen Polymeren gebracht wird, so dass zwischen den Doppelbindungen C=X (mit X = S, O oder N) der in die Polymerketten eingebauten funktionellen Gruppen S-C=X und den konjugierten Doppelbindungen des konjugierten Diens Hetero-Diels-Alder-Reaktionen bewirkt werden, wodurch insbesondere die chromophoren Zentren reagieren und eine Entfärbung stattfindet.
Wenn im Rahmen dieser Schrift von "einer chemischen Verbindung" oder "einer chemischen Substanz" - wie zum Beispiel auch einem Monomer, einem Regler, einer Reglersubstanz, einem Initiator oder dergleichen - die Rede ist, so ist damit nicht das einzelne Molekül, sondern die Art dieser chemischen Verbindung bzw. Substanz gemeint, also die jeweilige Gruppe identischer Moleküle. Sofern das einzelne Molekül gemeint ist, wird von dem Molekül der entsprechenden chemischen Substanz gesprochen (also zum Beispiel von einem Monomer-Molekül, einem Regler-Molekül, einem Reglersubstanz-Molekül beziehungsweise einem Intiiator-Molekül). Dementsprechend bedeutet der Ausdruck "mehrere chemische Verbindungen" (beispielweise auch mehrere Monomere, mehrere Regler und so weiter) mehrere Gruppen jeweils identischer Moleküle (beispielweise bedeutet "mehrere Monomere" mehrere Gruppen jeweils identischer Monomer-Moleküle in der jeweiligen Gruppe, wobei sich die Monomer-Moleküle zwischen den jeweiligen Gruppen unterscheiden; "mehrere Regler" mehrere Gruppen jeweils identischer Regler-Moleküle in der jeweiligen Gruppe, wobei sich die Regler-Moleküle zwischen den jeweiligen Gruppen unterscheiden; usw.). Wird hingegen von einer funktionellen Gruppe gesprochen, so ist damit, sofern im Einzelnen nichts anderes dargestellt ist, die individuelle funktionelle Gruppe gemeint.
Das erfindungsgemäße Verfahren ermöglicht die Herstellung wohldefinierter AcrylatPolymere, die erfindungsgemäß als Haftklebemassen eingesetzt oder zu diesen weiterverarbeitet werden.
Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können.

Die Polymerisation wird vorteilhaft durch einen oder mehrere radikalische Initiatoren initiiert. Als radikalische

Initiatoren zur Polymerisation eignen sich insbesondere thermisch zerfallende Initiatoren, besonders radikalbildende Azo-oder Peroxo-Initiatoren. Der bzw. die Inititiatoren werden bevorzugt vor und/oder im Verlauf der Polymerisation zugesetzt. Bevorzugt ist eine mehrfache Initiierung, bei welcher eine erste InitiatorZugabe vor oder zu Beginn der Polymerisation erfolgt und bei der im Verlaufe der Polymerisation zumindest eine weitere Inititatorzugabe erfolgt; wobei vorteilhaft die Zugabe weiterer Initiatoren in mindestens zwei Verfahrensstufen erfolgt. Dabei kann in jedem Zugabeschritt der zuerst eingesetzte Initiator, ein bereits zuvor eingesetzter Initiator oder ein anderer Initiator eingesetzt werden. Prinzipiell eignen sich alle für Acrylate bekannten üblichen Initiatoren.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di*tert*-butylperoxid, Azo-bis-(isobutyronitril), Cyclohexylsulfonylacetylperoxid, Diisopropylpercarbonat, Bis(4-*tert*-butylcyclohexyl)peroxydicarbonat (Perkadox® 16 der Fa. Akzo Nobel), *tert*-Butylperoktoat, Benzpinacol. In einer sehr bevorzugten Auslegung werden als radikalische Initiatoren 2,2'-Azo-bis-(2-methylbutyronitril) (Vazo 67® der Fa. DuPont) und/oder 1,1'-Azo-bis-(cyclohexancarbonsäurenitril) (Vazo 88® der Fa. DuPont) verwendet.

Weiterhin können auch Radikalquellen verwendet werden, die erst unter Bestrahlung mit UV-Licht Radikale freisetzen.

Zur Initiierung der Polymerisation ist für die thermisch zerfallenden Initiatoren der Eintrag von Wärme essentiell. Die Polymerisation kann für die thermisch zerfallenden Initiatoren insbesondere durch Erwärmen auf 50 bis 160 °C, je nach Initiatortyp, initiiert werden. Für den Einsatz von UV-Initiatoren wird mit UV-Licht der geeigneten Wellenlänge eingestrahlt. Diese Reaktion kann insbesondere in einem Temperaturbereich von 0 °C bis 150 °C durchgeführt werden.

In einer vorteilhaften Entwicklung des Verfahrens wird die Polymerisation - insbesondere durch Anwesenheit zumindest eines radikalischen Initiators - mit zumindest einem Dithioester bzw. einem Trithiocarbonat als Polymerisationsregler durchgeführt. In einer bevorzugten Variante des erfinderischen Verfahrens werden als RAFT-Regler Verbindungen der folgenden allgemeinen Strukturformel

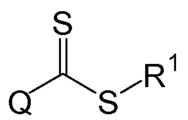

(I)

eingesetzt, wobei Q und $R^1$ unabhängig voneinander gewählt sind und Q bevorzugt ein Rest aus einer der Gruppen a) bis n) und $R^1$ bevorzugt ein Rest aus einer der Gruppen a), c) bis f) oder h) ist:

a) verzweigte und unverzweigte $C_1$- bis $C_{18}$-Alkyl-, verzweigte und unverzweigte $C_3$-bis $C_{18}$-Alkenyl-, verzweigte und unverzweigte $C_3$- bis $C_{18}$-Alkinylreste
b) Ethenyl- und Ethinylreste
c) nicht kondensierte und kondensierte Arylreste, besonders $C_6$- bis $C_{18}$-Arylreste, insbesondere unsubstituierte oder substituierte Phenylreste, unsubstituierte oder substituierte Benzylreste
d) aliphatische heterocyclische Reste, insbesondere $C_3$- bis $C_{12}$-Cycloalkylreste
e) aromatische heterocyclische Reste
f) substituierte Reste der Gruppe a), insbesondere

    f1) jeweils durch zumindest eine OH-Gruppe, ein Halogenatom oder einen Silylether substituierte Reste der Gruppe a),
    f2) jeweils durch zumindest eine Ester-, Amin-, Carbonat-, Cyano-, Isocyano- und/oder Epoxidgruppe und/oder mit Schwefel substituierte Reste der Gruppe a),

g) substituierte Reste der Gruppe a), insbesondere

    g1) jeweils durch zumindest eine OH-Gruppe, ein Halogenatom oder einen Silylether substituierte Reste der Gruppe b),
    g2) jeweils durch zumindest eine Ester-, Amin-, Carbonat-, Cyano-, Isocyano- und/oder Epoxidgruppe und/oder mit Schwefel substituierte Reste der Gruppe b),

h) $-NH_2$, $-NHR^I$, $-NR^IR^{II}$, $-NH-C(O)-R^I$, $-NR^I-C(O)-R^{II}$, $-NH-C(S)-R^I$, $-NR^I-C(S)-R^{II}$,

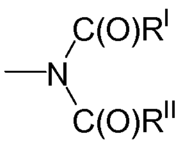 , 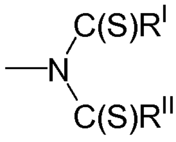 , 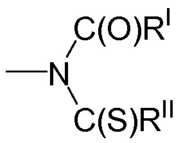

wobei $R^I$ und $R^{II}$ unabhängig voneinander gewählte Reste aus den Gruppe a) bis g) sind

i) -S-$R^I$, -S-C(S)-R', wobei $R^I$ ein Rest gewählt aus einer der Gruppen a) bis g) ist,

k) -O-$R^I$, -O-C(O)-$R^I$, wobei $R^I$ ein Rest gewählt aus einer der Gruppen a) bis g) ist,

l) Phosphatgruppenhaltige Reste, insbesondere -P(O)($OR^{III}$)($OR^{IV}$), wobei $R^{III}$ und $R^{IV}$ identisch oder unabhängig voneinander gewählte Reste aus den Gruppen a) bis g) sind,

m) $C_2$- bis $C_{18}$-Hetero-Alkylreste mit mindestens einem O-Atom und/oder mindestens einer $NR^I$-Gruppe in der Kohlenstoffkette, wobei $R^I$ ein Rest gewählt aus einer der Gruppen a) bis g) ist,

n) Wasserstoff.

Die genannten Substituenten-Auflistungen dienen nur als Beispiele für die jeweiligen Verbindungsgruppen und besitzen keinen Anspruch auf Vollständigkeit.

Weiterhin sind auch Verbindungen der folgenden Typen

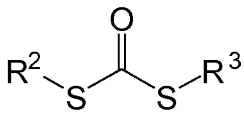

(II)

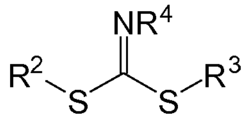

(III)

als Polymerisationsregler geeignet, wobei $R^2$, $R^3$ und $R^4$ unabhängig voneinander gewählt sind aus den Gruppen a) bis m).

In besonders bevorzugter erfindungsgemäßer Vorgehensweise werden folgende Verbindungen

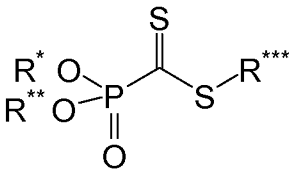

und/oder

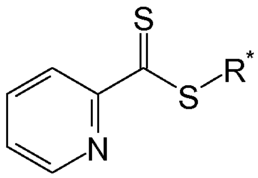

als Polymerisationsregler eingesetzt, wobei R*, R** und R*** allgemein und unabhängig voneinander gewählt organische Reste oder ggf. auch anorganische Reste darstellen; insbesondere werden diese Regler eingesetzt in Form der Verbindungen

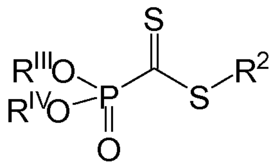

(IV)

bzw.

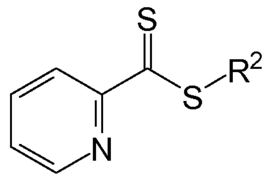

(V)

wobei $R^2$, $R^{III}$ und $R^{IV}$ wie vorstehend definiert sind.

Sehr vorteilhaft wird die Menge der RAFT-Regler derart gewählt, das sie in Summe mit einem (Gesamt-)Gewichts-Anteil von 0,001 % - 5 %, insbesondere von 0,025 % bis 0,25 % eingesetzt, bezogen auf die Monomere. Zudem ist es im erfinderischen Sinne sehr günstig, wenn das molare Verhältnis von zuerst zugesetztem radikalischen Initiator (erster Zugabeschritt) zur Menge aller RAFT-Regler im Bereich von 50 : 1 bis 1 : 1, insbesondere zwischen 10 : 1 und 2 : 1 liegt.

Besonders hervorragend ist das Verfahren geeignet zur Herstellung von Polymeren auf Acrylatbasis, also

solchen Polymeren, die zum Teil, insbesondere zum überwiegenden Teil (also zu mehr als 50 Gew.-%), auf Acrylsäure, Methacrylsäure, Acrylsäureestern und/oder Methacrylsäureestern als Monomeren (im folgenden gemeinschaftlich als "Acrylmonomere" bezeichnet) zurückzuführen sind (sofern im Rahmen dieser Schrift allgemein von "Acryl..." oder "Acrylat..." die Rede ist, sollen darin die entsprechenden methylsubstituierten Derivate, also die Methacrylverbindungen, mit enthalten sein, sofern dies im Einzelnen nicht anders dargestellt ist). Gleichsam umfasst der Ausdruck "(Meth)Acryl..." die entsprechenden Acrylverbindungen und die entsprechenden Methacrylverbindungen.

Besonders geeignet ist das Verfahren zur Herstellung von Acrylathaftklebemassen. Haftklebemassen bestehen üblicherweise aus einer Polymerkomponente, auch als Basispolymerkomponente bezeichnet, die ein Homopolymer, ein Copolymer oder eine Mischung aus Polymeren (Homopolymeren und/oder Copolymeren) sein kann. Die Zusammensetzung der Polymerkomponente kann je nach gewünschten Eigenschaften der Haftklebemasse gewählt werden. Üblicherweise werden der Basispolymerkomponente weitere Zusätze zum Teil in erheblichem Umfang zugesetzt, um die gewünschten Eigenschaften des Endproduktes (der Haftklebemasse) zu erhalten. Häufig werden Haftklebemassen vernetzt, um eine hinreichende Kohäsion zu bewirken.

Erfindungsgemäß vorteilhaft wird von einer Reaktionsvorlage, insbesondere einer Monomermischung, ausgegangen, in welcher ethylenisch ungesättigten Verbindungen, insbesondere aus (Meth-)Acrylsäure und/oder deren Derivate, vorliegen, wobei diese unter Einsatz von RAFT-Reglern radikalisch über einen RAFT-Prozess polymerisiert wird.

Die Polymerkomponente der Polyacrylathaftklebemasse umfasst vorteilhaft ein oder mehrere Polyacrylate, jeweils erhältlich durch (Co-)Polymerisation von

(a1) 70 bis 100 Gew.-% Acrylsäureester und/oder Methacrylsäureester und/oder deren freien Säuren mit der Formel

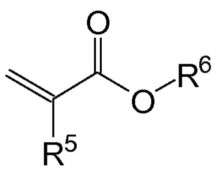 (VI)

,

wobei $R^5$ = H und/oder $CH_3$ darstellt und $R^6$ = H und/oder Alkylketten mit 1 bis 30 C-Atomen darstellt, mit
(a2) 0 bis 30 Gew.-% olefinisch ungesättigte Monomere mit funktionellen Gruppen.

Die Gewichtsangaben beziehen sich auf das jeweilige Polyacrylat.

Dieses Polyacrylat kann bzw. diese Polyacrylate können die Basispolymerkomponente der Haftklebemasse darstellen, aber auch mit weiteren Polymeren (Acrylatpolymeren oder anderen Polymeren) zur Basispolymerkomponente abgemischt sein.

Die Polymerkomponente wird insbesondere vorteilhaft derart gewählt, dass der GesamtGehalt an Acrylatmonomeren 40 bis 100 Gew,-%, besonders bevorzugt 50 bis 100 Gew.-% beträgt.

Vorzugsweise werden für die Monomere (a1) Acryl- und/oder Methacrylsäureester mit Alkylgruppen mit 1 bis 14 C-Atomen eingesetzt. Diese Acrylmonomere können beispielweise und vorteilhaft gewählt werden aus der folgenden Liste, umfassend Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie z. B. 2-Ethylhexylacrylat. Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Beispielweise und vorzugsweise werden für (a2) Monomere der folgenden Liste verwendet, umfassend Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N*-*tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, β-Acryloyloxypropionsäure, Trichloracrylsäure, Fumarsäure, Crotonsäure, Aconitsäure, Dirnethylacrylsäure, 4-Vinylbenzoesäure, wobei diese Aufzählung nicht abschließend ist.

Ebenso bevorzugt werden für die Komponente (a2) aromatische Vinylverbindungen eingesetzt, wobei die aromatischen Kerne bevorzugt auf C4- bis C18-Bausteinen basieren, aber auch Heteroatome enthalten können. Besonders bevorzugte Beispiele sind Styrol, 4-Vinylpyridin, *N*-Vinylphthalimid, Methylstyrol und 3,4-Dimethoxystyrol, wobei diese Aufzählung nicht abschließend ist.

Zur Polymerisation werden die Monomere dermaßen gewählt, dass die resultierenden Polymere als thermisch vernetzbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York **1989**) besitzen.

Die Art der Comonomere wird so gewählt, dass die Glasübergangstemperatur $T_{G,A}$ der Polymere (als Glasübergangstemperaturen werden im Rahmen dieser Schrift die über Dynamische Differenzkalorimetrie (DSC) nach DIN 53765 bestimmbaren statischen Glasübergangstemperaturen verstanden; die Angaben zur Glasübergangstemperatur $T_G$ im Rahmen dieser Schrift beziehen sich auf den Glasumwandlungstemperatur-Wert Tg nach DIN 53765:1994-03, sofern im Einzelfall nichts anderes angegeben ist) unterhalb der Anwendungstemperatur, bevorzugt bei $T_{G,A}$ <= 15 °C liegt. Um dies zu erreichen, wird weiterhin die mengenmäßige Zusammensetzung der Monomermischung vorteilhaft derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die hergestellten Polymere weisen bevorzugt ein gewichtsmittleres Molekulargewicht $M_w$ von 50.000 bis 600.000 g/mol, mehr bevorzugt zwischen 100.000 und 500.000 g/mol auf (die Bestimmung mittlerer Molekulargewichte $M_w$ und $M_n$ und von Polydispersitäten P erfolgt mittels Größenausschlusschromatographie [Gelpermeationschromatographie, GPC]; Kalibrierung: PMMA-Standards [Polymethylmethacrylat-Kalibrierung]). Die nach diesem Verfahren hergestellten Acrylathaftklebemassen besitzen, je nach Reaktionsführung, eine Polydispersität P von $M_w/M_n$ < 4,5. Besonders bevorzugt wird das erfinderische Verfahren derart durchgeführt, dass die Molekulargewichtsverteilung der Polyacrylate eine Polydispersität von 2 bis 3,5 aufweisen.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind beispielsweise reine Alkane (z. B. Hexan, Heptan, Octan, Isooctan), aromatische Kohlenwasserstoffe (z. B. Benzol, Toluol, Xylol), Ester (z.B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether), Ketone (z. B. Aceton, Butanon) und Ether (z. B. Diethylether, Dibutylether) oder Gemische davon. Die wässrigen Reaktionssysteme für wässrige Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Colösungsmittel für die vorliegende Erfindung werden bevorzugt gewählt aus der folgenden Gruppe, bestehend aus aliphatischen Alkoholen, Glycolen, Ethern, Glycolethern, Pyrrolidinen, *N*-Alkylpyrrolidinonen, *N*-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt üblicherweise - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zum Gegenstand der Erfindung zählt weiterhin die Reaktion der aus den RAFT-Reglern stammenden funktionellen Gruppen im Polymerisationsprodukt mit konjugierten Dienen unter Hetero-Diels-Alder-Mechanismen. Hiedurch ergibt sich ein Verfahren zur Entfärbung und/oder Desodorierung der Polymere, die erfindungsgemäß für Polyacrylathaftklebemassen eingesetzt werden.

Überraschend wurde gefunden, dass durch die Zugabe von konjugierten Dienen die Verfärbung bedingt durch die RAFT-Reagenzien bzw. Neben- und Spaltprodukte, die bei der Herstellung oder Umsetzung der RAFT-Reagenzien auftreten, deutlich minimiert und teilweise komplett entfernt wird, ohne dabei die Klebeigenschaften der Masse zu verändern. Auch der Geruch der Schwefelverbindungen wird dabei teilweise gemindert, sodass er im Produkt nicht mehr als störend oder gar nicht mehr wahrgenommen wird.

Das bzw. die konjugierten Diene können dabei vorteilhaft zu den erhaltenen Polymeren zugesetzt (zugemischt) werden, insbesondere zu einem Zeitpunkt, zu dem die Polymerisation weitgehend oder bereits vollständig abgeschlossen ist. Somit wird vermieden, dass die Regler ihre Wirksamkeit durch Hetero-Diels-Alder-Reaktionen verlieren, solange diese noch für die Polymerisation erforderlich ist.

Geeignet sind alle Dien-Komponenten, die mit den Doppelbindungen C=X der funktionellen Gruppen S-C=X

aus den RAFT-Reagenzien insbesondere in den Polymerketten als Dienophil eine Hetero-Diels-Alder-Reaktion eingehen kann, wie dies nachfolgend schematisch dargestellt ist:

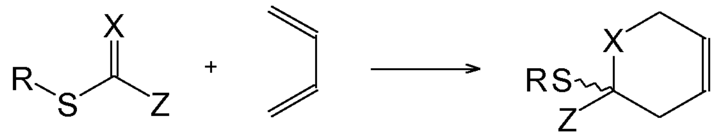

(VII)

Zur Entfärbung tragen auch Diels-Alder-Reaktionen bei, die mit den entsprechenden Gruppen C=X in Nebenprodukten und Regler-Überresten aus der Polymerisation ablaufen.

Die Wirksamkeit der konjugierten Diene bezüglich der aus den Reglern stammenden funktionellen Gruppen kann der Fachmann durch geläufige Überlegungen ohne unzumutbaren Aufwand ermitteln, etwa mittels der Woodward-Hoffmann-Regeln oder über HOMO-LUMO-Betrachtungen, bei cyclischen Dienen auch mittels Betrachtungen zum Abbau der Ringspannung. Diese Theorien sind in vielen Lehrbüchern ausführlich beschrieben und gehören zum Kenntnisstand des Fachmanns.

Sehr bevorzugt werden die Diene derart gewählt, dass sie auch in der Lage sind, Thiole, die häufig als Nebenprodukte auftreten und meist für den Geruch verantwortlich sind oder zumindest zu diesem beitragen, mittels Hydrothiolierung und/oder Thiol-En-Reaktion zu binden.

Vorzugsweise werden als Diene acyklische und cyklische Verbindungen mit zwei konjugierten Doppelbindungen, besonders bevorzugt elektronenarme acyklische oder cyklische Verbindungen mit zwei konjugierten Doppelbindungen eingesetzt. Beispiele für die erfindungsgemäßen Diene sind 1,3-Butadien, 1-Methoxy-1,3-butadien, 2,4-Hexadien, (2*E*)-2,4-Pentandiensäure, Sorbinsäure und deren Ester, 2,4-Hexadien-1,6-dicarbonsäure und deren Ester, 1,3-Cyclohexadien, 1-Methoxy-1,3-cyclohexadien, Anthracen, substituierte und unsubstituierte Furane, substituierte und unsubstituierte Thiophene.

Besonders bevorzugt sind substituierte und unsubstituierte Cyclopentadiene, (*E*)-1-Methoxy-3-trimethylsilyloxy-1,3-butadien (Danishefsky-Dien), 1-(Trimethylsiloxy)-1,3-butadien, 1-(Triethylsiloxy)-1,3-butadien und (1*E*,3*Z*)-1-Methoxy-2-methyl-3-(trimethylsilyloxy)-1,3-pentadien als Diene, da diese schon bei Raumtemperatur in wenigen Minuten katalysatorfrei zu einer Entfärbung führen.

Zusätzlich oder alternativ zu zugemischten konjugierten Dienen können die Diene auch in situ erzeugt werden, insbesondere durch Zugabe einer oder mehrerer solcher chemischen Verbindungen zu den erhaltenen Polymeren, aus der in situ konjugierte Diene erzeugt werden können.

Weiterhin erfindungsgemäß kann die Entfärbung somit auch bewirkt werden durch solche in-situ-erhältlichen Diels-Alder-Reaktion-befähigten Diene, wie beispielsweise o-Chinodimethan, welches unter anderem mittels Metallkatalysatoren aus 1,2-Bis(chlormethyl)benzol oder 1,2-Bis(brommethyl)benzol sowie photochemisch mittels UV-Licht aus (2,5-Dimethylphenyl)(phenyl)methanon-Derivaten hergestellt werden kann.

Bevorzugt werden solche konjugierten Diene verwendet (zugemischt und/oder in situ erzeugt), bei denen die konjugierten Doppelbindungen in dem Baustein C=C-C=C nicht durch Heteroatome substituiert sind.

Im erfindungsgemäßen Sinne als sehr bevorzugt herausgestellt hat sich die Kombination eines Dithioesters als RAFT-Reagenz, insbesondere ein Dithioester nach einer der vorstehenden Formeln IV und/oder V, und Cyclopentadien als konjugiertes Dien zur Entfärbung der Polymere, die erfindungsgemäß für Haftklebemassen eingesetzt werden.

Das Verfahren zur Entfärbung der Polymere, die erfindungsgemäß für Haftklebemassen eingesetzt werden, findet bevorzugt in Lösung statt, kann aber auch in der Schmelze oder in Dispersionen durchgeführt werden, wobei die Reaktion sowohl thermisch als auch photochemisch ablaufen kann. Bevorzugt findet die Entfärbungsreaktion bei Temperaturen bis zu 120 °C statt, besonders bevorzugt findet sie unter milden Bedingungen bis zu 40 °C statt. Die Reaktion bei niedrigen Temperaturen kann vorteilhaft durch Zugabe einer Lewis-Säure (z.B. $ZnCl_2$) und/oder einer Brønsted-Säure (Trifluoressigsäure, p-Toluolsulfonsäure) katalysiert werden.

Gegenstand der Erfindung sind weiterhin die durch das erfindungsgemäße Verfahren - einschließlich des Entfärbungsschrittes - erhaltenen Haftklebemassen.

Durch die Entfärbungsreaktion weisen die erhaltenen Polymere, die erfindungsgemäß für Haftklebemassen eingesetzt werden, Cyclo-1-X-hex-3-en-Bausteine in den Polymerketten auf, wobei der Hex-3-en-Teilbaustein gegebenenfalls auch durch Heteroatome substituiert sein kann (je nach eingesetzten konjugierten Dienen). Weiter sind Gegenstand der Erfindung daher Haftklebemassen umfassend Polymere auf Acrylatbasis, die Cyclo-1-X-hex-3-en-Bausteine mit X = S, O oder N in den Polymerketten enthalten, insbesondere solche Polymere dieser Art erhältlich durch das erfindungsgemäße Verfahren. Die Mehrzahl dieser Polymere wird dabei genau einen solchen Cyclo-1-X-hex-3-en-Baustein pro Polymerkette aufweisen.

Wie bereits angedeutet, können die erfindungsgemäßen Polymere - je nach bereits vorhandenen klebenden oder selbstklebenden Eigenschaften - sehr gut als Klebemassen, insbesondere als Haftklebemassen, eingesetzt oder

zu solchen weiterverarbeitet werden, da ihre Polymerstruktur und die Polydispersität sehr gut steuerbar sind und damit die klebtechnischen Eigenschaften auf den beabsichtigten Verwendungszweck abgestimmt sein können und es dennoch möglich ist, nahezu farblose Polymersysteme zur Verfügung zu stellen. Da durch die erfindungsgemäße Entfärbungsreaktion die Struktur und die Zusammensetzung des Polymers sich nur unwesentlich ändern, werden die Eigenschaften der Klebemasse nicht beeinflusst. Insbesondere für die Verwendung als Haftklebemassen können der Basispolymerkomponente (bzw. der schon teilabgemischten Haftklebemasse) übliche, zur Erzielung und/oder Verbesserung der haftklebrigen Eigenschaften zweckdienliche Zusätze oder zur Erzielung und/oder Verbesserung anderer Eigenschaften zweckdienliche Additive zugemischt werden.

So können insbesondere Harze beigemischt werden, insbesondere klebrigmachende Harze. Als klebrigmachende Harze sind beispielweise die bekannten und in der Literatur beschriebenen Klebharze einsetzbar. Im allgemeinen lassen sich alle mit der entsprechenden Klebemasse kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Beispielhaft genannt seien die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Kombinationen dieser und weiterer Harze können gezielt eingesetzt werden, um die Eigenschaften der resultierenden Klebemasse wunschgemäß einzustellen.

Weiterhin können optional Weichmacher (Plastifizierungsmittel), Füllstoffe (z. B. Fasern, Russ, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt werden.

Es können verträgliche Vernetzersubstanzen zugesetzt werden, um eine Vernetzung zu erzeugen. Als Vernetzer eignen sich z. B. Metallchelate, multifunktionelle Isocyanate, multifunktionelle Epoxide, multifunktionelle Aziridine, multifunktionelle Oxazoline oder multifunktionelle Carbodiimide. Auch multifunktionelle Acrylate lassen sich vorteilhaft als Vernetzer für eine actinische Bestrahlung verwenden.

Bei der Verwendung der erfindungsgemäß erhältlichen Polymere als Haftklebemassen, bietet es sich an, diese ein- oder doppelseitig auf einen Träger aufgetragen als Klebeband anzubieten. Die Klebebänder können weitere Schichten aufweisen, wie etwa weitere Trägerschichten, Funktionsschichten oder dergleichen.

Für die Verankerung der Haftklebemasse auf dem Träger oder auf einem anderen Substrat kann es von Vorteil sein, wenn die Masse und/oder das Substrat vor der Beschichtung mit Corona oder Plasma behandelt wird. Für die atmosphärische Plasmabehandlung eignen sich z. B. Geräte der Fa. Plasmatreat.

Weiterhin kann es für den Prozess und für die Verankerung der Haftklebemassenschicht mit weiteren möglichen Schichten, wie beispielweise Trägern, zum Beispiel einer Folie auf Basis von Polyester, Polyamid, Polymethacrylat, PVC, etc. oder einem viskoelstischen geschäumten oder ungeschäumten Träger auf Basis von Polyacrylat oder Polyurethan von Vorteil sein, wenn eine chemische Verankerung z. B. über einen Primer stattfindet.

Bevorzugt wird die innere Festigkeit (Kohäsion) der Haftklebemasse durch eine Vernetzung gesteigert. Besonders bevorzugt für die Verwendung als Haftklebemasse werden solche Polyacrylat-basierenden Massen eingesetzt, die koordinativ oder kovalent vernetzbar sind, um zu gewährleisten, dass die Klebemasse ein konstantes Eigenschaftsprofil besitzt. Für derartige Vernetzungen ist die vorherige Beigabe geeigneter Vernetzer vorteilhaft, insbesondere wie sie weiter oben aufgeführt sind.

Das einseitige oder doppelseitige Klebeband ist für Transport, Lagerung oder Stanzung vorzugsweise mindestens einseitig mit einem Liner versehen, also zum Beispiel einer silikonbeschichteten Folie oder einem Silikonpapier.

Eine weitere vorteilhafte Ausführung der Erfindung ist die Verwendung einer Schicht einer trägerfreien Haftklebemasse als selbstklebendes Haftklebeband, also als sogenanntes Transferklebeband. Als trägerfreie Klebemasse wird eine Klebemasse bezeichnet, die keinen dauerhaften Träger, aufweist. Vielmehr ist die selbstklebende Masse in bevorzugter Ausgestaltung lediglich auf einen temporären Träger, also ein Material, das lediglich vorübergehend zur Stützung und leichteren Auftragbarkeit der selbstklebenden Masse dient, aufgebracht. Solche temporären Träger werden auch als Liner bezeichnet und können vorteilhaft eine Releasewirkung aufweisen, etwa durch geeignete Oberflächenbeschichtungen. Für die Verwendung der Haftklebemassenschicht zur Verklebung auf einer Substratoberfläche wird der Liner dann entfernt, und der Liner stellt somit kein produktives Bauteil dar.

Die Herstellung einer solchen erfindungsgemäßen Polymerschicht kann aus Lösung sowie aus der Schmelze erfolgen. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebemasseschicht.

Die erfindungsgemäße Polymerschicht kann in unterschiedlichen Schichtdicken hergestellt werden, insbesondere auch mit einer Schichtdicke von mindestens 25 μm, vorzugsweise von mindestens 100 μm, weiter vorzugsweise von mindestens 200 μm.

Im Folgenden wird die Erfindung anhand einiger Beispiele näher erläutert, ohne die Erfindung damit zu beschränken.

**Beispiele**

Testmethoden

Folgende Testmethoden wurden angewendet, um die klebtechnischen als auch generelle Eigenschaften der hergestellten Haftklebemassen zu evaluieren.

Gelpermeationschromatographie GPC (Test A)

Die Bestimmung der mittleren Molekulargewichte $M_n$ und $M_w$ und der Polydisperistät P erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ (5 μm), 103 Å. ID 8,0 mm x 50 mm verwendet. Zur Auftrennung wurden die Säulen PSS-SDV, 5 μ (5 μm), 103 Å (0,0103 μm) sowie 105 Å (0,0105 μm) und 106 Å (0,0106 μm) mit jeweils ID 8,0 mm x 300 mm eingesetzt. Die Probenkonzentration betrug 4 g/L, die Durchflussmenge 1,0 mL pro Minute. Es wurde gegen PMMA-Standards gemessen.

180° Klebkrafttest (Test B)

Ein 20 mm breiter Streifen einer auf einen Polyester-Träger schichtförmig aufgetragenen Acrylathaftklebemasse wurde mit der freiliegenden Seite auf Stahlplatten, die zuvor zweimal mit Aceton und einmal mit Isopropanol gewaschen wurden, oder PE-Platten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen und die hierfür erforderliche Kraft gemessen. Alle Messungen wurden bei Raumtemperatur durchgeführt.
Die Messergebnisse sind in N/cm und als arithmetischer Mittelwert aus drei Messungen angegeben.

Scherfestigkeit (Test C)

Ein 13 mm breiter Streifen des Klebebandes wurde auf die glatte Oberfläche einer Stahlplatte, die dreimal mit Aceton und einmal mit Isopropanol gereinigt wurde, derart aufgebracht, dass die Verklebungsfläche 20 mg · 13 mm (Länge · Breite) beträgt, die Verklebungsfläche mit einer seiner schmalen Kanten bündig an einer der Kanten der Stahlplatte anliegt und das Klebeband über diese Kante der Stahlplatte frei herausragt. Anschließend wurde mit 2 kg Anpressdruck das Klebeband im Bereich der Verklebungsfläche viermal auf die Stahlplatte gedrückt.
Die Stahlplatte wurde dann derart aufgehängt, dass die besagte Kante der Stahlplatte nach unten zeigt und das überstehende Ende des Klebebandes frei nach unten hängt. Bei Raumtemperatur wurde ein 1 kg-Gewicht an dem überstehenden Ende des Klebebandes befestigt und der Lösevorgang des Klebebandes beobachtet. Die gemessenen Scherstandzeiten sind die Zeiten, nach denen das Klebeband vom Träger abfiel, in Minuten angegeben und entsprechen dem arithmetischen Mittelwert aus drei Messungen.

Farbmessung (L*a*b*-Farbraummessung) (Test D)

Der L*a*b*-Farbraum ist ein Messraum, in dem alle wahrnehmbaren Farben enthalten sind. Der Farbraum ist auf Grundlage der Gegenfarbentheorie konstruiert. Eine der wichtigsten Eigenschaften des L*a*b*-Farbmodells ist seine Geräteunabhängigkeit, das heißt, die Farben werden unabhängig von der Art ihrer Erzeugung und Wiedergabetechnik definiert. Die entsprechende deutsche Norm ist DIN 6174: "Farbmetrische Bestimmung von Farbmaßzahlen und Farbabständen im angenähert gleichförmigen CIELab-Farbenraum".
Die Bestimmung der Farben erfolgte mit einem BYK Gardner spectro-guide Farbmessgerät. Die Bestimmung der Farben erfolgte nach der CIELab Skala mit der Lichtart D/65°. In diesem dreidimensionalen Farbraum sind die folgenden Achsen definiert:

$$L^* = \text{Helligkeit } (0 = \text{Schwarz}, 100 = \text{Weiß})$$

$$a^* = \text{Rot - Grün } (-120 = \text{Grün}, +120 = \text{Rot})$$

b* = Gelb - Blau (-120 = Blau, +120 = Gelb)

Referenzfliese:

Bianco Luce Weiss Glänzend, S. White Line, 1234567359687 Sorte 01, 20 x 20 x 0,7cm.

Herstellung der Untersuchungsmuster und experimetelle Untersuchung

Herstellung von Bis-2,2'-phenylethyl-thiocarbonat (1)

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 1988, 18, 1531-1536. Ausbeute nach Destillation: 72 %.

Charakterisierung: $^1$H-NMR ($CDCl_3$) $\delta$ (ppm): 7,20-7,40 (m, 10 H), 1,53, 1,59 (2 x d, 6 H), 3,71, 3,81 (2 x m, 2 H).

Trithiocarbonat-funktionalisiertes Polystyrol (2):

In einem 500 mL Schlenkgefäß wurden 400 mL Styrol und 3,47 g des Trithiocarbonates (1) (11,72 mmol) eingefüllt, das Gefäß dreimal entgast und dann unter Argon die Polymerisation durchgeführt. Zur Initiierung wurde auf 120 °C hochgeheizt und unter Rühren 30 h polymerisiert. Zur Isolierung wurde auf RT abgekühlt, das Polymer in 1000 mL Dichlormethan gelöst und dann in 7,5 L Methanol unter starkem Rühren gefällt. Der Niederschlag wurde über eine Fritte abfiltriert und dann über GPC analysiert. ($M_n$ = 23500 g/mol, $M_w/M_n$ = 1,32).

Beispiel 1

Ein für radikalische Polymerisationen konventioneller Reaktor wurde mit 32 g Trithiocarbonat-funktionalisiertem Polystyrol (2), 442 g 2-Ethylhexylacrylat, 4,5 g Acrylsäure und 0,12 g Vazo 67® (Fa. DuPont) befüllt. Nach 20 Minuten Durchleiten von Argon und zweimaligen Entgasen wurde der Reaktor unter Rühren auf 70 °C hochgeheizt für 16 h polymerisiert. Zur Isolierung wurde auf RT abgekühlt, das Blockcopolymer PS-P(EHA/AS)-PS mit Aceton auf 50 % verdünnt und dann über ein konventionelles Rakel auf einem 23 $\mu$m dicken PET-Träger beschichtet und dann für 15 Minuten bei 120 °C getrocknet. Der Masseauftrag betrug 50 g/m$^2$. Das Polymer weist eine leicht gelbliche Färbung auf. GPC-Analyse: ($M_n$ = 95500 g/mol, $M_w/M_n$ = 2,24) Anschließend wurde nach Testmethode B und C ausgetestet (siehe Tabelle 1).

Beispiel 2

Ein für radikalische Polymerisationen konventioneller Reaktor wurde mit 32 g n-Butylacrylat, 442 g 2-Ethylhexylacrylat, 4,5 g Acrylsäure, 1,40 g 4-(Benzothioylsulfanyl)-4-cyanopentansäure (5,00 mmol, Aldrich, CAS No. 201611-92-9) und 0,12 g Vazo 67® (Fa. DuPont) befüllt. Nach 20 Minuten Durchleiten von Argon und zweimaligen Entgasen wurde der Reaktor unter Rühren auf 70 °C hochgeheizt für 16 h polymerisiert. Zur Isolierung wurde auf RT abgekühlt, das Polymer mit Aceton auf 50 % verdünnt, 0,2 Gew.-% bezogen auf das Polymer Aluminiumacetylacetonat (Aldrich, CAS No. 13963-57-0) zugegeben und anschließend über ein konventionelles Rakel auf einem 23 $\mu$m dicken PET-Träger beschichtet und dann für 15 Minuten bei 120 °C getrocknet. Der Masseauftrag betrug 50 g/m$^2$. Das Polymer weist eine rötliche Färbung auf. GPC-Analyse: ($M_n$ = 104000 g/mol, $M_w/M_n$ = 2,09) Anschließend wurde nach Testmethode B und C ausgetestet (siehe Tabelle 1).

Entfärbung der Klebemasse (Beispiele 1a und 2a)

Zu der in Beispiel 1 und 2 hergestellten Polymerlösungen werden 1,2 Äquivalente bezogen auf die Stoffmenge des zuvor eingesetzten RAFT-Reglers frisch destilliertes Cyclopentadien unter starkem Rühren bei Raumtemperatur getropft. Anschließend wurde die Lösungen für eine halbe Stunde gerührt, wobei eine deutliche Abnahme der Verfärbung festgestellt werden konnte. Die Lösungen hatten jeweils nur noch einen geringen Gelbstich und wurden mit Aceton auf 50 % verdünnt. Anschließend wurden zu der Lösung aus Beispiel 2 0,2 Gew.-% bezogen auf das Polymer Aluminiumacetylacetonat (Aldrich, CAS No. 13963-57-0) zugegeben und beide Lösungen über ein konventionelles Rakel auf einem 23 $\mu$m dicken PET-Träger beschichtet und für 15 Minuten bei 120 °C getrocknet. Der Masseauftrag betrug jeweils 50 g/m$^2$. Anschließend wurde nach Testmethode B, C und D ausgetestet (siehe Tabellen 1 und 2).

**Ergebnisse**

Tabelle 1: Klebdaten

| Beispiel | Klebkraft Stahl [N/cm] | Klebkraft PE [N/cm] | Scherstandszeiten [Min] |
|---|---|---|---|
| 1 | 3,2 | 2,1 | > 10000 |
| 1a | 3,2 | 2,1 | > 10000 |
| 2 | 4,5 | 2,5 | 5400 |
| 2a | 4,5 | 2,4 | 5500 |

Tabelle 2: L*a*b*-Werte

| Beispiel | L* | a* | b* |
|---|---|---|---|
| 1 | 86,25 | -0,41 | 3,08 |
| 1a | 92,28 | -0,12 | 2,36 |
| 2 | 79,68 | -1,52 | 4,40 |
| 2a | 92,26 | -0,06 | 2,25 |

Die Experimente belegen, dass nach der Zugabe von Cyclopentadien die Farbigkeit deutlich reduziert werden konnte unter Beibehaltung der Klebeigenschaften. Die Verfärbung der Polymere bei Einsatz von Trithiocarbonaten als RAFT-Regler ist generell geringer ist als diejenige bei Verwendung von Dithioestern als RAFT-Regler. Bereits bei Trithiocarbonaten ist eine sehr gute Entfärbung der Polymere festzustellen, die Entfärbungsreaktion bei Einsatz von Dithioestern verläuft jedoch noch weitaus effizienter.

**Patentansprüche**

1. Verfahren zur Herstellung von Haftklebemassen auf Acrylatbasis,
in dem Polymere auf Acrylatbasis hergestellt werden,
wobei zunächst eine kontrollierte radikalische Polymerisationsreaktion einer Reaktionsvorlage umfassend zumindest ein Monomer auf Acrylatbasis
in Anwesenheit zumindest einer Reglersubstanz mit zumindest einer funktionellen Gruppe S-C=X durchgeführt wird, wobei X = S, O oder N, wobei die Reglersubstanz aus der Gruppe umfassend Dithioester, Dithiocarbonate, Dithiocarbamate, Trithiocarbonate, Imido-Dithio-Carbonate und Xanthate ("RAFT-Regler") gewählt ist,
wobei die Reglersubstanz-Moleküle so in die entstehenden Polymerketten eingebaut wird, dass die jeweiligen Polymerketten zumindest eine funktionelle Gruppe des eingebauten Reglers aufweisen,
**dadurch gekennzeichnet, dass**
zumindest eine chemische Verbindung, die zumindest zwei konjugierte Doppelbindungen aufweist (im Folgenden als "konjugiertes Dien" bezeichnet), in Kontakt mit den derart erhaltenen Polymeren gebracht wird,
so dass zwischen den Doppelbindungen C=X der in die Polymerketten eingebauten funktionellen Gruppen S-C=X und den konjugierten Doppelbindungen des konjugierten Diens Hetero-Diels-Alder-Reaktionen bewirkt werden,
und wobei die erhaltenen Polymere auf Acrylatbasis als Haftklebemassen verwendet werden oder zu Haftklebemassen weiterverarbeitet werden.

2. Verfahren nach Anspruch 1, **dadurch gekennzeichnet, dass**
die chemische Verbindung, die zumindest zwei konjugierte Doppelbindungen aufweist (also das konjugierte Dien), zu den erhaltenen Polymeren gegeben wird.

3. Verfahren nach einem der vorangehenden Ansprüche, **dadurch gekennzeichnet, dass**
zumindest eine solche chemische Verbindung zu den erhaltenen Polymeren gegeben wird, aus der in situ eine solche chemische Verbindung, die zumindest zwei konjugierte Doppelbindungen aufweist (also ein konjugiertes

Dien), erzeugt werden kann.

4. Verfahren nach einem der vorangehenden Ansprüche, **dadurch gekennzeichnet, dass** die Verbindungen aufweisend die konjugierten Doppelbindungen in dem Baustein C=C-C=C nicht heterosubstituiert sind.

5. Verfahren nach einem der Ansprüche 1 bis 3, **dadurch gekennzeichnet, dass** die konjugierten Diene gewählt sind aus der Gruppe umfassend 1,3-Butadien, 1-Methoxy-1,3-butadien, 2,4-Hexadien, (2*E*)-2,4-Pentandiensäure, Sorbinsäure und deren Ester, 2,4-Hexadien-1,6-dicarbonsäure und deren Ester, 1,3-Cyclohexadien, 1-Methoxy-1,3-cyclohexadien, Anthracen, substituierte und unsubstituierte Furane, substituierte und unsubstituierte Thiophene, substituierte und unsubstituierte Cyclopentadiene, (*E*)-1-Methoxy-3-trimethylsilyloxy-1,3-butadien, 1-(Trimethylsiloxy)-1,3-butadien, 1-(Triethylsiloxy)-1,3-butadien, (1*E*,3*Z*)-1-Methoxy-2-methyl-3-(trimethylsilyloxy)-1,3-pentadien.

6. Verfahren nach einem der vorangehenden Ansprüche, **dadurch gekennzeichnet, dass** als Reglersubstanz ein Dithioester mit einem oder mehreren Heteroaromat-Substituenten und/oder mit einem oder mehreren Phosphonatsubstituenten im Säurerest eingesetzt werden, insbesondere eine der Verbindungen

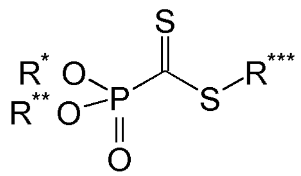

und/oder

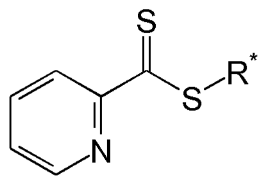

7. Verfahren nach einem der vorangehenden Ansprüche, **dadurch gekennzeichnet, dass** als Reglersubstanz ein Dithioester und als Dien Cyclopentadien eingesetzt wird.

8. Haftklebemassen umfasssend Polymere auf Acrylatbasis, **gekennzeichnet durch** Cyclo-1-X-hex-3-en-Bausteine in den Polymerketten, mit X = S, O und/oder N.

## Claims

1. Method for producing acrylate-based pressure sensitive adhesives, in which acrylate-based polymers are produced, wherein first a controlled radical polymerization reaction of an initial reaction charge comprising at least one acrylate-based monomer is carried out in the presence of at least one chain transfer agent (CTA) having at least one functional group S-C=X, where X = S, 0 or N, the CTA being selected from the group encompassing dithioesters, dithiocarbonates, dithiocarbamates, trithiocarbonates, imidodithiocarbonates, and xanthates ("RAFT CTAs"), the CTA molecules being incorporated into the polymer chains that form in such a way that the polymer chains in question have at least one functional group of the incorporated CTA,
**characterized in that**
at least one chemical compound which has at least two conjugated double bonds (referred to hereinafter as "conjugated diene") is contacted with the polymers thus obtained, so that hetero-Diels-Alder reactions are brought about between the double bonds C=X of the functional groups S-C=X incorporated into the polymer chains and the conjugated double bonds of the conjugated diene, and wherein the acrylate-based polymers obtained are used as pressure sensitive adhesives or further-processed to pressure sensitive adhesives.

2. Method according to Claim 1, **characterized in that** the chemical compound which has at least two conjugated double bonds (i.e., the conjugated diene) is added to the polymers obtained.

3. Method according to any of the preceding claims,
**characterized in that**
the polymers obtained are admixed with at least one chemical compound from which it is possible in situ to generate a chemical compound which has at least two conjugated double bonds (i.e., a conjugated diene).

4. Method according to any of the preceding claims, **characterized in that** the compounds having the conjugated double bonds in the unit C=C-C=C are not heterosubstituted.

5. Method according to any of Claims 1 to 3, **characterized in that** the conjugated dienes are selected from the group encompassing 1,3-butadiene, 1-methoxy-1,3-butadiene, 2,4-hexadiene, (2*E*)-2,4-pentanedienoic acid, sorbic acid and its esters, 2,4-hexadiene-1,6-dicarboxylic acid and its esters, 1,3-cyclohexadiene, 1-methoxy-1,3-cyclohexadiene, anthracene, substituted and unsubstituted furans, substituted and unsubstituted thiophenes, substituted and unsubstituted cyclopentadienes, (*E*)-1-methoxy-3-trimethylsilyloxy-1,3-butadiene, 1-(trimethylsiloxy)-1,3-butadiene, 1-(triethylsiloxy)-1,3-butadiene, (1*E*,3*Z*)-1-methoxy-2-methyl-3-(trimethylsilyloxy)-1,3-pentadiene.

6. Method according to any of the preceding claims, **characterized in that** the chain transfer agent (CTA) used is a dithioester having one or more heteroaromatic substituents and/or having one or more phosphonate substituents in the acid radical, more particularly one of the compounds

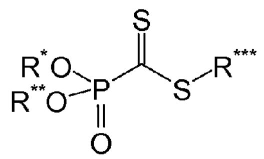

and/or

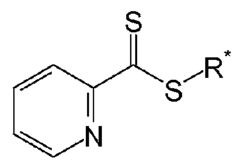

.

7. Method according to any of the preceding claims, **characterized in that** the chain transfer agent (CTA) used is a dithioester and the diene used is cyclopentadiene.

8. Pressure sensitive adhesives comprising acrylate-based polymers, **characterized by** cyclo-1-X-hex-3-ene units in the polymer chains, with X = S, 0 and/or N.

**Revendications**

1. Procédé de fabrication de matériaux adhésifs de contact à base d'acrylate, dans lequel des polymères à base d'acrylate sont fabriqués, une réaction de polymérisation radicalaire contrôlée d'une préparation de réaction comprenant au moins un monomère à base d'acrylate étant tout d'abord réalisée en présence d'au moins une substance régulatrice contenant au moins un groupe fonctionnel S-C=X, avec X = S, O ou N, la substance régulatrice étant choisie dans le groupe comprenant les dithioesters, les dithiocarbonates, les dithiocarbamates, les trithiocarbanates, les imido-dithio-carbonates et les xanthates (« régulateurs RAFT »),
la molécule de la substance régulatrice étant incorporée dans les chaînes polymères formées de telle sorte que les chaînes polymères comprennent chacune au moins un groupe fonctionnel du régulateur incorporé,
**caractérisé en ce que**
au moins un composé chimique qui comprend au moins deux doubles liaisons conjuguées (par la suite nommé « diène conjugué ») est mis en contact avec les polymères ainsi obtenus,
de manière à provoquer des réaction d'hétéro-Diels-Alder entre les doubles liaisons C=X des groupes fonctionnels S-C=X incorporés dans les chaînes polymères et les doubles liaisons conjuguées du diène conjugué,
et les polymères à base d'acrylate obtenus étant utilisés en tant que matériaux adhésifs de contact ou transformés en matériaux adhésifs de contact.

2. Procédé selon la revendication 1, **caractérisé en ce que** le composé chimique qui comprend au moins deux doubles liaisons conjuguées (c'est-à-dire le diène conjugué) est ajouté aux polymères obtenus.

3. Procédé selon l'une quelconque des revendications précédentes, **caractérisé en ce qu'**au moins un composé chimique à partir duquel un composé chimique qui comprend au moins deux doubles liaisons conjuguées (c'est-à-dire un diène conjugué) peut être généré in situ est ajouté aux polymères obtenus.

4. Procédé selon l'une quelconque des revendications précédentes, **caractérisé en ce que** les composés comprenant les doubles liaisons conjuguées ne sont pas hétérosubstitués dans le composant C=C-C=C.

5. Procédé selon l'une quelconque des revendications 1 à 3, **caractérisé en ce que** les diènes conjugués sont choisis dans le groupe comprenant :

le 1,3-butadiène, le 1-méthoxy-1,3-butadiène, le 2,4-hexadiène, l'acide (2E)-2,4-pentadiénique, l'acide sorbique et ses esters, l'acide 2,4-hexadiène-1,6-dicarboxylique et ses esters, le 1,3-cyclohexadiène, le 1-méthoxy-1,3-cyclohexadiène, l'anthracène, les furanes substitués et non substitués, les thiophènes substitués et non substitués, les cyclopentadiènes substitués et non substitués, le (E)-1-méthoxy-3-triméthylsilyloxy-1,3-butadiène, le 1-(triméthylsiloxy)-1,3-butadiène, le 1-(triéthylsiloxy)-1,3-butadiène, le (1E,3Z)-1-méthoxy-2-méthyl-3-(triméthylsilyloxy)-1,3-pentadiène.

6. Procédé selon l'une quelconque des revendications précédentes, **caractérisé en ce qu'**un dithioester contenant un ou plusieurs substituants hétéroaromatiques et/ou un ou plusieurs substituants phosphonate dans le radical acide est utilisé en tant que substance régulatrice, notamment un des composés

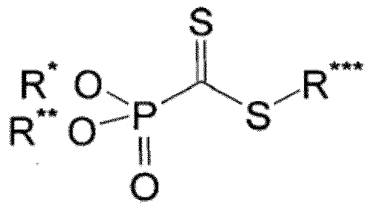

et/ou

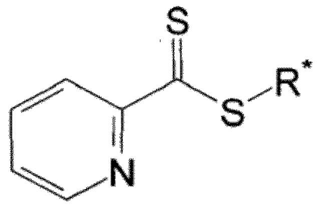

.

7. Procédé selon l'une quelconque des revendications précédentes, **caractérisé en ce qu'**un dithioester est utilisé en tant que substance régulatrice et le cyclopentadiène en tant que diène.

8. Matériaux adhésifs de contact comprenant des polymères à base d'acrylate, **caractérisés par** des composants cyclo-1-X-hex-3-ène dans les chaînes polymères, avec X = S, 0 et/ou N.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9801478 A1
- WO 9931144 A1
- EP 1626994 A1
- WO 2011101175 A

### In der Beschreibung aufgeführte Nicht-Patentliteratur

- **BOUSQUET, BARNER-KOWOLLIK, STENZEL.** Synthesis of Comb Polymers via Grafting-Onto Macromolecules Bearing Pendant Diene Groups via Hetero-Diels-Alder-RAFT Click Concept. *Journal of Polymer Science Part A: Polymer Chemistry,* 2010, vol. 48 (8), 1773-1781
- **T.G. FOX.** *Bull. Am. Phys. Soc.,* 1956, vol. 1, 123
- *Synth. Communications,* 1988, vol. 18, 1531-1536